(19) Europäisches Patentamt
European Patent Office
Office européen des brevets

(11) **EP 2 944 920 A1**

(12) **EUROPEAN PATENT APPLICATION**

(43) Date of publication:
**18.11.2015 Bulletin 2015/47**

(51) Int Cl.:
**G01C 19/5712** *(2012.01)*

(21) Application number: **15157248.4**

(22) Date of filing: **02.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **16.05.2014 US 201461994515 P
06.10.2014 US 201414507546**

(71) Applicant: **Honeywell International Inc.
Morristown, NJ 07962-2245 (US)**

(72) Inventors:
• **Johnson, Burgess R.
Morristown, NJ 07962-2245 (US)**
• **Chang, Steve
Morristown, NJ 07962-2245 (US)**
• **Moore, Sean
Morristown, NJ 07962-2245 (US)**
• **Reinke, John
Morristown, NJ 07962-2245 (US)**

(74) Representative: **Houghton, Mark Phillip
Patent Outsourcing Limited
1 King Street
Bakewell, Derbyshire DE45 1DZ (GB)**

(54) **Mass-loaded coriolis vibratory gyroscope**

(57) A mass-loaded resonator for use in a vibratory sensor is disclosed. In at least one embodiment, the mass-loaded resonator includes a common base having a top face, a bottom face and a plurality of sides. Furthermore, a plurality of flexures are attached to the common base and project substantially perpendicular from the normal of the top face of the common base when the mass-loaded resonator is at rest. Moreover, the plurality of flexures have a thickness that is substantially less than the thickness of the common base.

FIG. 1

Printed by Jouve, 75001 PARIS (FR)

**Description**

GOVERNMENT LICENSE RIGHTS

The U.S. Government may have certain rights in the present invention as provided for by terms of Government Contract No. HR0011-11-C-0036 with the *Defense Advanced Research Projects Agency* (DARPA).

CROSS-REFERENCE TO RELATED APPLICATIONS

This application claims the benefit of United States Provisional Patent Application Serial No. 61/994,515, filed on May 16, 2014, which is hereby incorporated herein by reference.

BACKGROUND

A mechanical resonator that has two resonant modes can be used as a vibratory sensor in various applications including, but not limited to, a coriolis vibratory gyroscope that is capable of sensing an externally applied rotation. A coriolis vibratory gyroscope will also be referred to herein as a vibratory gyroscope. In exemplary vibratory gyroscopes, the two degenerate resonances are configured so that an external rotation acting on the velocity of motion of one resonant mode produces a Coriolis Force acting on the other resonant mode.

An objective of high performance vibratory gyroscopes is for the two resonant modes of the resonator to have long resonant decay times (also referred to herein as "ringdown time"). The ringdown time, $\tau$, is given by $\tau = Q / (\pi * f)$, where f is the resonant frequency. As a result, if the resonator quality factor (Q) can be kept relatively constant, a long ringdown time can be achieved by designing a resonator with a low resonant frequency. However, low resonant frequencies typically require the use of thin resonator material films that may have high mechanical damping and hence lower resonator Q than the Q exhibited in thicker films.

SUMMARY

A mass-loaded resonator for use in a vibratory sensor is disclosed. In at least one embodiment, the mass-loaded resonator includes a common base having a top face, a bottom face and a plurality of sides. Furthermore, a plurality of flexures are attached to the common base and project substantially perpendicular from the normal of the top face of the common base when the mass-loaded resonator is at rest. Moreover, the plurality of flexures have a thickness that is substantially less than the thickness of the common base.

DRAWINGS

Understanding that the drawings depict only exemplary embodiments and are not therefore to be considered limiting in scope, the exemplary embodiments will be described with additional specificity and detail through the use of the accompanying drawings, in which:

   Figure 1 is an example embodiment of a mass-loaded resonator for use as a vibratory sensor;

   Figure 2 is a graph showing how thicker polycrystalline diamond films provide a higher Quality Factor, Q;

   Figures 3A-3B are examples of resonant modes for the mass-loaded resonator shown in Figure 1; and

   Figure 4 is a flow diagram of an example method to construct the mass-loaded resonator for use as a vibratory sensor.

In accordance with common practice, the various described features are not drawn to scale but are drawn to emphasize specific features relevant to the exemplary embodiments.

DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

As mentioned above, low resonant frequencies typically require the use of thin resonator material films that may have high mechanical damping and hence lower resonator Q than the Q exhibited in thicker films. The embodiments described in this disclosure solve this problem. Specifically, the embodiments achieve a low resonant frequency while still maintaining a high Q factor by including a massive body as part of the resonator to create a mass-loaded resonator. The massive body will also be referred to herein as a common base. As a result, the resonant frequency of the resonator is lowered while a high Q factor is maintained.

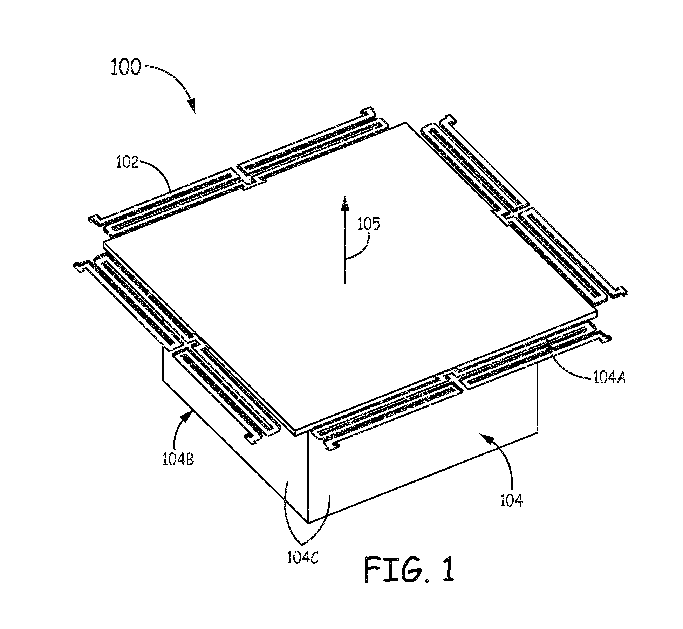

Figure 1 is an example embodiment of a mass-loaded resonator 100 for use as a vibratory sensor in various applications including, but not limited to, a coriolis vibratory gyroscope. The vibratory gyroscopes discussed herein can include various types of vibratory gyroscopes, with one example being a microelectromechanical systems (MEMS) vibratory gyroscope. The mass-loaded resonator 100 will also be referred to herein as "resonator" 100. The resonator 100 comprises a common base 104 and plurality of flexures 102 attached to the common base 104 and configured to support the common base 104. The Q of the resonator 100 is determined by the material properties of the flexures 102. Thick flexures 102 may be used in the resonator 100 in order to provide a higher Q.

As can be seen in the drawings, the common base 104 has a top face 104A, a bottom face 104B and a plurality of sides 104C. Furthermore, the plurality of flexures 102 project in a direction that is substantially perpendicular to the normal 105 of the top face 104A of the common base 104 when the resonator 100 is at rest. In exemplary embodiments, the thickness of the plurality of flexures 102 will be substantially thinner than the thickness of the common base 104.

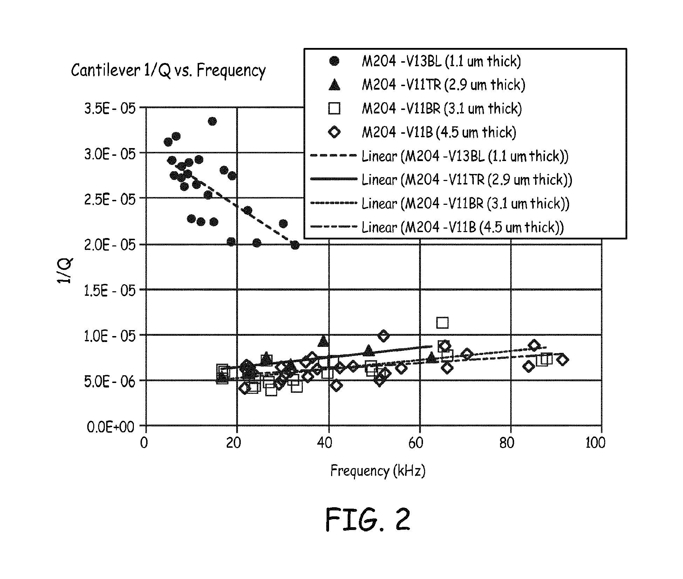

Figure 2 is a graph showing how an example material, a polycrystalline diamond film, used as a resonator, provides a higher Q as the film's thickness increases. More specifically, 1/Q is graphed as a function of frequency for different thicknesses of the polycrystalline diamond films. The polycrystalline diamond film thicknesses include 1.1 micrometers, 2.9 micrometers, 3.1 micrometers and 4.5 micrometers. The dotted lines are linear fits to the plotted data with the outliers being excluded. As can be seen from the graph, polycrystalline diamond films with thicknesses of 1.1 micrometers show roughly 5 times higher damping (1/Q) than resonators with diamond thickness of 2.9 - 4.5 micrometers. Therefore, in exemplary embodiments, thicker flexures 102, e.g., flexures thicker than 2.9 micrometers, can be used in the resonator 100 to provide a higher Q for the resonator 100.

The materials that can be used for the flexures 102 can include any materials with low mechanical loss. In some embodiments, the flexures 102 can be made of the same material as the common base 104. In some of these embodiments, this may include patterning the flexures 102 and the common base 104 from the same block of material. In other embodiments, the flexures 102 can be made of a different material than the common base 104. In embodiments where the flexures 102 are made of a different material than the common base 104, the flexures 102 can be a deposited film onto the common base 104 and in other embodiments, the flexures 102 can be a bulk material thinned to the desired thickness and applied to the common base 104. It may be advantageous to use a bulk material, since some materials can exhibit higher Q in bulk form than in deposited films of comparable dimensions. Ultra-low expansion glass (~5% TiO2 in SiO2) is such a material since the proper microstructure for high mechanical Q is typically achieved only by high temperature annealing of the bulk glass. Flexures fabricated by thinning of bulk material are typically thicker than flexures formed by depositing thin films, so a large mass is needed to achieve low resonant frequency. In some embodiments, the plurality of flexures 104 can be attached to a top plate and the top plate is then attached to the common base 104. In some embodiments, the plurality of flexures 104 is attached to the top plate because the top plate and the flexures 104 are made from a single piece of material and the flexures 104 are patterned into the material. In some embodiments, the flexure material and the top plate can be fusion bonded to the common base. In some other embodiments, the flexure material can be adhered to the common base using an adhesive such as glass frit.

Some examples of materials that can be used for the flexures 102 include diamond, single crystal silicon, fused silica, silicon and ultra-low expansion glass. Moreover, the thicknesses for the flexures 102 can vary; however, the thickness will impact the quality factor, Q, of the resonator 100, so the thickness of the flexures 102 can be chosen according to the desired Q. In embodiments where diamond is used for the flexures 102, some example thickness for the flexures 102 can be roughly 5-15 micrometers. In some embodiments, where an ultra-low expansion glass is used, the thickness for the flexures 102 can be roughly 10-50 micrometers thick. However, these are only examples and are not meant to be limiting.

As mentioned above, the thicker the flexures 102, the higher resonant frequency of the resonator 100. To counter the high resonant frequency associated with thick flexures 102, a common base 104 that has a thickness that is substantially thicker than the thickness of the flexures 102 is included with the resonator 100, as shown in Figure 1. As a result, the resonant frequency of the resonator 100 is decreased. The reason the resonant frequency of the resonator 100 is decreased is because the resonant frequency decreases as the mass increases since the resonant frequency is proportional to $1/\sqrt{m}$.

Due to incorporating the common base 104 into the resonator 100, the resonant frequency "f" of the resonator 100 can be decreased by an order of magnitude, which will increase the ringdown time of the resonator.

The mass of the common base 104 can be different in different embodiments, as well, but is chosen to substantially lower the resonant frequency of the resonator 100. The mass of the common base 104 will determine the resonant frequency of the resonator 100, so the mass of the common base 104 can be chosen accordingly, i.e., in conjunction with the thickness of the flexures 102, which will also impact the resonant frequency of the resonator 100. In particular, the more massive the common base 104, if everything else is held constant, the lower the resonant frequency of the resonator 100. As a result, generally, the thicker the flexures 102, the more massive the common base 104 will need to be to lower the resonant frequency of the resonator 100 to a desired low resonant frequency. Thus, the thickness and material of the flexures 102 will be determined in conjunction with the mass of the common base 104.

In exemplary embodiments, the thickness and mass of the common base 104 and the thickness and the material properties of the flexures 102 will be chosen so that the resonant frequency of the resonator 100 will be less than 2khz, i.e., a resonant frequency greater than ambient vibrations. In some embodiments, this resonant frequency may correspond to a thickness of the common base being approximately 300 microns thick to 2 mm thick, but again, it depends on the thickness and material properties of the flexures 102 and the density of the materials used in fabricating the common body 104.

Similar to the flexures 102, different materials can make up the common base 104. As stated above, in some embodiments, the common base 104 can be made of the same material as the flexures 102 and in other embodiments, the common base 104 can be made of a different material than the flexures 102. Therefore, the common base 104 can be made of any of the materials that the flexures 102 are made from. Some examples include, but are not limited to, diamond, single crystal silicon, fused silica, silicon and ultra-low expansion glass.

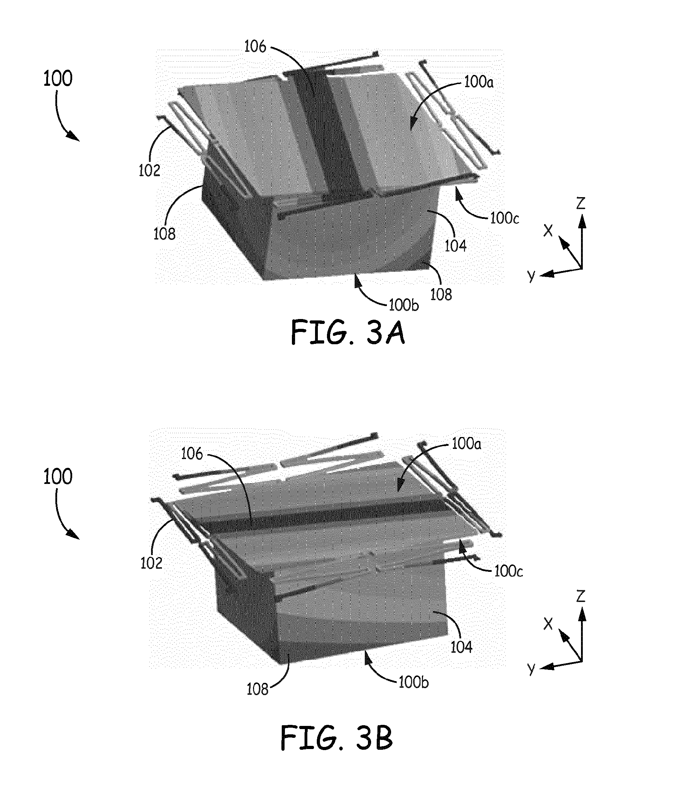

Figures 3A-3B are examples of resonant modes for the resonator 100 shown in Figure 1. In Figures 3A-3B, two resonant modes of the resonator 100 are shown, one resonant mode in each Figure. The regions 106 in Figures 3A-3B have near zero total displacement and the regions 108 have the largest displacement. The two modes consist of pendulous motion of the common base 104, with the maximum pendulous excursions occurring in the regions 108. In exemplary embodiments, the two modes have the same resonant frequency. In whole angle gyroscope operation, the relative amplitudes of the two modes can vary with time, causing precession of the oscillation axis around the axis of applied external rotation.

In some embodiments, the flexures 102 can be secured to a top plate. In some embodiments, two or more mass-loaded resonators could be connected by flexures so that the massive bodies oscillate in antiphase, to reduce anchor loss and minimize vibration sensitivity of the gyroscope output.

As is known to one having skill in the art, the acceleration of an object due to the Coriolis Effect is determined by the following equation, $a_{cor} = 2V \times \Omega$, where V is the velocity of the moving object and $\Omega$ is the rate of rotation of the moving object about an axis. In some embodiments, electrodes (not shown) can be placed on the top portion 100a and bottom portion 100b of the resonator 100 for use in inducing a velocity, V, in the resonator 100. In some other embodiments, electrodes (not shown) can be placed on the top 100a and bottom 100c surfaces of the top portion of the resonator 100 for use in exciting the resonator 100 and inducing a velocity, V, in the resonator 100. The electrodes (not shown) can be formed by depositing conductive films on the resonator 100. In Figure 3A, a velocity is induced about the x-axis of the resonator 100 by applying an electrostatic force to the electrodes (not shown) on the resonator 100.

As mentioned above, in Figure 3A, a velocity of the resonator 100 is induced about the x-axis, as can be seen in Figure 3A due to the near zero displacement in the center of the resonator 100 along the x-axis with increasing displacement as you move away from the center portion of the resonator 100 indicated by the stripe 106.

Once a velocity is induced on the resonator 100, then if the resonator 100 is rotated about the z-axis, the Coriolis Effect will induce an acceleration about the y-axis, according to the equation $a_{cor} = 2V \times \Omega$, and as is shown in Figure 3B. That is, the resonator 100 in Figure 3A was rotated about the z-axis, which induced the resonator to experience a Coriolis Force that induced the resonator 100 to accelerate about the y-axis, as can be seen in Figure 3B since there is near zero displacement in the center of the resonator 100 along the y-axis and as you move away from the center portion of the resonator 100, there is increasing displacement.

The electrodes (not shown) that were placed on the resonator 100 for inducing a resonator 100 velocity, as discussed above, can also be used as capacitive sensing electrodes to sense the motion of the resonator 100 by measuring the varying capacitance of the electrodes induced by the resonator motion. From these varying capacitances, the coriolis acceleration experienced by the resonator 100 can be derived, which will yield the rate of rotation about the z-axis, according to the equation discussed above, $a_{cor} = 2V \times \Omega$. In some other embodiments, the capacitive sensing electrodes (not shown) can be a separate set of electrodes from the electrodes that induce velocity in resonator 100.

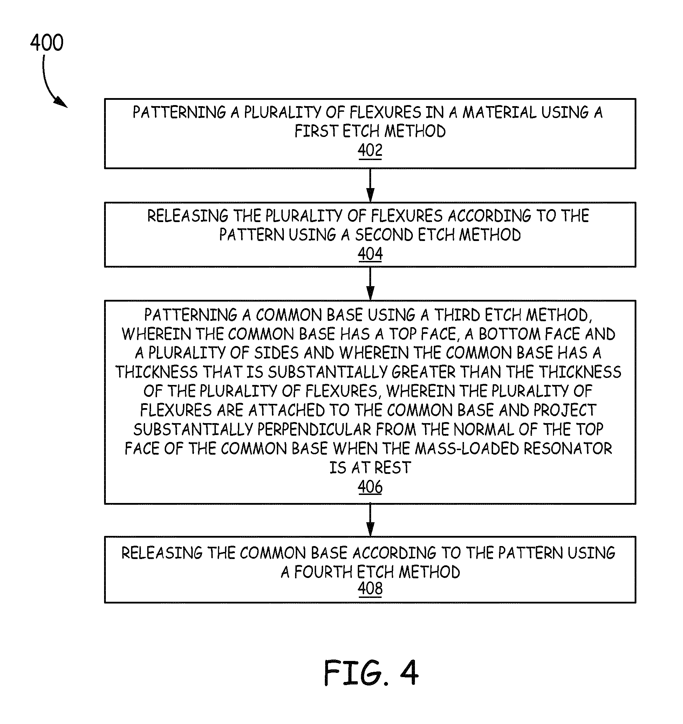

Figure 4 is a flow diagram of an example method 400 to construct the mass-loaded resonator for a vibratory sensor. The method 400 comprises patterning a plurality of flexures in a material using a first etch method (block 402). The material used to pattern the plurality of flexures can be one or a combination of the materials discussed above in Figures 1-3B, such as polycrystalline diamond, single crystal silicon, fused silica, ultra-low expansion glass and silicon.

In some embodiments, the pattern of the flexures can be similar to the design of the flexures 102 seen in the resonator 100 in Figures 1, 3A-3B above. Other flexure patterns can be used, as well, and will depend on the desired frequency and quality factor, Q, of the resonator.

In some embodiments, the first etch method can be a dry etch method, and in some embodiments, the first etch method can be a wet etch method. Examples of dry etching methods include, but are not limited to, reactive ion etching (RIE), deep reactive ion etching (DRIE), plasma etching, sputter etching and vapor phase etching. Examples of wet etching include, but are not limited to, aqueous potassium hydroxide (KOH) etching, hydrogen fluoride (HF) etching, and buffered oxide etching (BOE). However, these are just examples and not meant to be limiting. In exemplary embodiments, the first etch is the dry etch method oxygen reactive ion etching (RIE).

Method 400 further comprises releasing the plurality of flexures according to the pattern using a second etch method. The second etch method can include, but is not limited to, any of the etching methods discussed above in regards to the first etch method. In exemplary embodiments, if the common base is made from a silicon wafer, the third etch method uses an aqueous potassium hydroxide (KOH) solution to remove silicon attached to the bottom side of the patterned flexures.

Method 400 further comprise patterning a common base using a third etch method wherein the common base has a top face, a bottom face and a plurality of sides and wherein the common base has a thickness that is substantially greater than the thickness of the plurality of flexures and wherein the plurality of flexures are attached to the common base and project substantially perpendicular from the normal of the top face of the common base when the mass-loaded resonator is at rest (block 406). The third etch method can include, but is not limited to, any of the etching methods discussed above in regards to the first etch method. In exemplary embodiments, if the common base is made from a silicon wafer, the second etch method could consist of deep reactive ion etching (DRIE) to etch most of the way through the silicon wafer. Similarly, the shape of the common base can include, but is not limited to, any of the shape of the common base 104 discussed above.

In exemplary embodiments, the thickness and mass of the common base and the thickness and the material properties of the flexures will be patterned so that the resonant frequency of the resonator will be less than 2khz, i.e., a resonant frequency greater than ambient vibrations. In some embodiments, this resonant frequency may correspond to a thickness of the common base being approximately 300 microns thick to 2 mm thick, but again, it depends on the thickness and material properties of the flexures 102 and the density of the materials used in fabricating the common body 104.

In some embodiments, the common base can be patterned from the same material as the flexures. In other embodiments the flexures and common base can be made of different materials. For example, if the common base is made of a different material than the flexures, method 400 may include depositing the flexure material onto one side of the common base or onto a substrate material from which the dimensions of the common base are subsequently defined by patterning and etching processes. The deposition of the flexure material can be done in a number of different ways, including, but not limited to, hot-filament chemical vapor deposition (CVD). In some embodiments, the flexures can be attached to a top plate and the top plate is then attached to the common base. In some embodiments, the plurality of flexures is attached to the top plate because the top plate and the flexures are made from a single piece of material and the flexures are patterned into the material. In some embodiments, the flexure material and the top plate can be fusion bonded to the common base. In some other embodiments, the flexure material can be adhered to the common base using an adhesive such as glass frit. In one example where the common base is a different material than the flexures, the common base can be made of silicon and the flexures made of polycrystalline diamond.

This is only an example, however, and is not meant to be limiting. As is described above, the type of materials used for the plurality of flexures and the common base, i.e., whether they are the same material or different materials, along with the etch methods will determine how the common base is attached to the plurality of flexures.

Furthermore method 400 includes releasing the common base according to the pattern using a fourth etch method (block 408). The fourth etch method can include, but is not limited to, any of the etching methods discussed above in regards to the first etch method. In exemplary embodiments, if the common base is made from a silicon wafer, the fourth etch method could consist of etching silicon in an aqueous KOH solution. In some embodiments, the third etch method that releases flexures could be the same as the fourth etch method that releases the common base.

As a result of this method 400, multiple mass-loaded resonators can be fabricated at the same time, which reduces the costs of manufacturing mass-loaded resonators.

EXAMPLE EMBODIMENTS

Example 1 includes a mass-loaded resonator for use in a vibratory sensor: a common base having a top face, a bottom face and a plurality of sides; and a plurality of flexures attached to the common base and projecting substantially perpendicular from the normal of the top face of the common base when the mass-loaded resonator is at rest, wherein the plurality of flexures have a thickness that is substantially less than the thickness of the common base.

Example 2 includes the mass-loaded resonator of Example 1, wherein the common base and the plurality of flexures are patterned from a single piece of material.

Example 3 includes the mass-loaded resonator of any of Examples 1-2, wherein the plurality of flexures are attached to a top plate and wherein the top plate is attached to the common base.

Example 4 includes the mass-loaded resonator of Example 3, wherein the plurality of flexures and the top plate are patterned from a single piece of material.

Example 5 includes the mass-loaded resonator of any of Examples 1-4, further comprising a plurality of electrodes attached to the common base, wherein the plurality of flexures are configured to excite the mass-loaded resonator into two degenerate modes when at least one electric field is applied to the plurality of electrodes.

Example 6 includes the mass-loaded resonator of any of Examples 1-5, wherein the plurality of flexures are comprised of a material having a low mechanical loss.

Example 7 includes the mass-loaded resonator of any of Examples 1-6, wherein the mass-loaded resonator has a resonant frequency that is greater than 2 kilohertz.

Example 8 includes the mass-loaded resonator of any of Examples 1-7, wherein the plurality of flexures are substantially comprised of one or more of the following materials: diamond, single crystal silicon, fused silica, silicon or ultra-low expansion glass.

Example 9 includes the mass-loaded resonator of any of Examples 1-8, wherein the common base is substantially comprised of one or more of the following materials: diamond, single crystal silicon, fused silica, silicon or ultra-low expansion glass.

Example 10 includes a method for constructing a mass-loaded resonator comprising: patterning a plurality of flexures in a material using a first etch method; and releasing the plurality of flexures according to the pattern using a second etch method; patterning a common base using a third etch method, wherein the common base has a top face, a bottom face and a plurality of sides and wherein the common base has a thickness that is substantially greater than the thickness of the plurality of flexures and wherein the plurality of flexures are attached to the common base and project substantially perpendicular from the normal of the top face of the common base when the mass-loaded resonator is at rest; and releasing the common base according to the pattern using a fourth etch method.

Example 11 includes the method of Example 10, wherein the plurality of flexures and the common base are patterned from a single piece of material.

Example 12 includes the method of any of Examples 10-11, further comprising: patterning a top plate, wherein the plurality of flexures are attached to the top plate and wherein the plurality of flexures and the top plate are patterned from a single piece of material; and attaching the top plate to the common base.

Example 13 includes the method of Example 12, wherein attaching the top plate to the common base comprises either depositing the flexure material and the top plate material on to one side of the resonator or bonding the top plate to the resonator.

Example 14 includes the method of any of Examples 10-13, wherein the first etch method and the second etch method are the same etch methods.

Example 15 includes the method of any of Examples 10-14, wherein the third etch method and the fourth etch method are the same etch methods.

Example 16 includes the method of any of Examples 10-15, wherein the first etch method, the second etch method, the third etch method and the fourth etch method is one of the following etch methods: reactive ion etching, deep reactive ion etching, plasma etching, sputter etching, vapor phase etching, aqueous potassium hydroxide etching, hydrogen fluoride etching, or buffered oxide etching.

Example 17 includes the method of any of Examples 10-16, wherein the mass-loaded resonator has a resonant frequency that is greater than 2 kilohertz.

Example 18 includes a mass-loaded resonator gyroscope, comprising: a support plate; a mass-loaded resonator including: a common base having a top face, a bottom face and a plurality of sides; and a plurality of flexures attached to the common base and projecting substantially perpendicular from the normal of the top face of the common base when the mass-loaded resonator is at rest, wherein the plurality of flexures have a thickness that is substantially less than the thickness of the common base; and a plurality of electrodes attached to the mass-loaded resonator, wherein the plurality of flexures are configured to excite the mass-loaded resonator into two degenerate modes when at least one electric field is applied to the plurality of electrodes.

Example 19 includes the mass-loaded resonator gyroscope of Example 18, wherein the common base and the plurality of flexures are patterned from a single piece of material.

Example 20 includes the mass-loaded resonator gyroscope of any of Examples 18-19, wherein the plurality of flexures are attached to a top plate, wherein the top plate is attached to the common base, and wherein the plurality of flexures and the top plate are patterned from a single piece of material.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

**Claims**

1.  A mass-loaded resonator (100) for use in a vibratory sensor:

    a common base (104) having a top face (104A), a bottom face (104B) and a plurality of sides (104C); and
    a plurality of flexures (102) attached to the common base (104) and projecting substantially perpendicular from the normal (105) of the top face (104A) of the common base (104) when the mass-loaded resonator (100) is at rest, wherein the plurality of flexures (102) have a thickness that is substantially less than the thickness of the common base (104).

2.  The mass-loaded resonator (100) of claim 1, wherein the plurality of flexures (102) are attached to a top plate and wherein the top plate is attached to the common base (104).

3.  The mass-loaded resonator (100) of claim 1, further comprising a plurality of electrodes attached to the common base (104), wherein the plurality of flexures (102) are configured to excite the mass-loaded resonator (100) into two degenerate modes when at least one electric field is applied to the plurality of

electrodes.

etching.

4. The mass-loaded resonator (100) of claim 1, wherein the plurality of flexures (102) and the common base (104) are substantially comprised of one or more of the following materials: diamond, single crystal silicon, fused silica, silicon or ultra-low expansion glass.

5. A method for constructing a mass-loaded resonator comprising:

patterning a plurality of flexures in a material using a first etch method (402); and
releasing the plurality of flexures according to the pattern using a second etch method (404); patterning a common base using a third etch method, wherein the common base has a top face, a bottom face and a plurality of sides and wherein the common base has a thickness that is substantially greater than the thickness of the plurality of flexures and wherein the plurality of flexures are attached to the common base and project substantially perpendicular from the normal of the top face of the common base when the mass-loaded resonator is at rest (406); and releasing the common base according to the pattern using a fourth etch method (408).

6. The method of claim 5, further comprising:

patterning a top plate, wherein the plurality of flexures are attached to the top plate and wherein the plurality of flexures and the top plate are patterned from a single piece of material; and attaching the top plate to the common base.

7. The method of claim 6, wherein attaching the top plate to the common base comprises either depositing the flexure material and the top plate material on to one side of the resonator or bonding the top plate to the resonator.

8. The method of claim 5, wherein the first etch method and the second etch method are the same etch methods.

9. The method of claim 5, wherein the third etch method and the fourth etch method are the same etch methods.

10. The method of claim 5, wherein the first etch method, the second etch method, the third etch method and the fourth etch method is one of the following etch methods: reactive ion etching, deep reactive ion etching, plasma etching, sputter etching, vapor phase etching, aqueous potassium hydroxide etching, hydrogen fluoride etching, or buffered oxide

FIG. 1

FIG. 2

FIG. 3A

FIG. 3B

400

PATTERNING A PLURALITY OF FLEXURES IN A MATERIAL USING A
FIRST ETCH METHOD
402

RELEASING THE PLURALITY OF FLEXURES ACCORDING TO THE
PATTERN USING A SECOND ETCH METHOD
404

PATTERNING A COMMON BASE USING A THIRD ETCH METHOD,
WHEREIN THE COMMON BASE HAS A TOP FACE, A BOTTOM FACE AND
A PLURALITY OF SIDES AND WHEREIN THE COMMON BASE HAS A
THICKNESS THAT IS SUBSTANTIALLY GREATER THAN THE THICKNESS
OF THE PLURALITY OF FLEXURES, WHEREIN THE PLURALITY OF
FLEXURES ARE ATTACHED TO THE COMMON BASE AND PROJECT
SUBSTANTIALLY PERPENDICULAR FROM THE NORMAL OF THE TOP
FACE OF THE COMMON BASE WHEN THE MASS-LOADED RESONATOR
IS AT REST
406

RELEASING THE COMMON BASE ACCORDING TO THE PATTERN USING
A FOURTH ETCH METHOD
408

# FIG. 4

Europäisches
Patentamt

European
Patent Office

Office européen
des brevets

# EUROPEAN SEARCH REPORT

Application Number

EP 15 15 7248

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 203 208 A (BERNSTEIN JONATHAN J [US]) 20 April 1993 (1993-04-20) | 1-5,8-10 | INV. G01C19/5712 |
| A | * column 2, line 17 - column 3, line 66; figures * | 6,7 | |

-----

TECHNICAL FIELDS
SEARCHED       (IPC)

G01C

The present search report has been drawn up for all claims

| Place of search | Date of completion of the search | Examiner |
|---|---|---|
| The Hague | 15 September 2015 | Hoekstra, Frank |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT**

**ON EUROPEAN PATENT APPLICATION NO.**                    EP 15 15 7248

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2015

| Patent document cited in search report | Publication date | Patent family member(s) | Publication date |
|---|---|---|---|
| US 5203208 A | 20-04-1993 | NONE | |

EPO FORM P0459

## EP 2 944 920 A1

**REFERENCES CITED IN THE DESCRIPTION**

**Patent documents cited in the description**

- US 61994515 B